# EUROPÄISCHE PATENTSCHRIFT

(11) **EP 4 274 711 B1**
(45) Veröffentlichungstag und Bekanntmachung des Hinweises auf die Patenterteilung: **12.11.2025**
(21) Anmeldenummer: 21827382.9
(22) Anmeldetag: 26.11.2021
(51) Int. Cl.: B25J 9/10

(54) **VERFAHREN ZUR POSITIONIERUNG**
POSITIONING METHOD
PROCÉDÉ DE POSITIONNEMENT

(30) Priorität: 11.01.2021 DE 102021100276
(43) Veröffentlichungstag der Anmeldung: 15.11.2023
(73) Patentinhaber: Schaeffler Technologies AG & Co. KG, 91074 Herzogenaurach (DE)
(72) Erfinder: KIRIHARA, Daisuke, Chino-city, Nagano-pref, 391-0011 (JP)
(74) Vertreter: Schaeffler Technologies
(86) Internationale Anmeldenummer: PCT/DE2021/100937
(87) Internationale Veröffentlichungsnummer: WO 2022/148507

(56) Entgegenhaltungen:
- EP-A1- 3 623 113
- DE-A1- 102018 125 079

## Beschreibung

Die Erfindung betrifft eine Antriebseinheit für einen Roboter mit einer Antriebswelle, einem Antriebsmotor zum Antreiben der Antriebswelle und einem Spannungswellengetriebe zum Übersetzen der Antriebswelle auf eine Ausgangswelle, wobei das Spannungswellengetriebe einen mit der Antriebswelle wirkverbundenen Wellenerzeuger, einen flexiblen Ring und einen mit der Ausgangswelle verbindbaren Zahnring aufweist, umfassend einen ersten Sensor zum Detektieren einer Winkelposition der Antriebswelle und einen zweiten Sensor zum Detektieren einer Winkelposition der Ausgangswelle. Weiterhin betrifft die Erfindung einen Roboter mit einer solchen Antriebseinheit sowie ein Verfahren zum Regeln der Winkelposition der Ausgangswelle bei einer solchen Antriebseinheit.

Gattungsgemäße Antriebseinheiten sind aus dem Stand der Technik bekannt und werden insbesondere in der Robotik eingesetzt, um beispielsweise Roboterarme zu verfahren, deren Anwendung in der Industrie, in der Labortechnik oder in der Medizintechnik liegt. Dafür sind die Antriebseinheiten mit Spannungswellengetrieben ausgestattet, um für ein präzises Verfahren eines Roboterarms eine sehr hohe Übersetzung zwischen Antriebsmotor und dem zu verfahrenden Teil des Roboters zu ermöglichen. Spannungswellengetriebe weisen einen Wellenerzeuger bzw. Wellengenerator auf, der einen unrunden, insbesondere ovalen Querschnitt aufweist und in einem flexiblen Ring, auch Flexspline genannt, umläuft, wobei der flexible Ring umlaufend verformt wird. Der flexible Ring weist eine Außenverzahnung auf, die lediglich an den zwei au-βen liegenden Punkten seiner Verformung in eine Innenverzahnung eines als Außenrings ausgebildeten Zahnrings eingreift. Durch die umlaufende Verformung laufen auch die Eingriffspunkte um, wobei sich die Zähnezahl von flexiblem Ring und Zahnring unterscheiden, so dass der Zahnring in eine Drehbewegung versetzt wird, die wesentlich langsamer ist als die Drehbewegung des Wellenerzeugers.

Der Antriebsmotor wird mittels eines Regelverfahrens geregelt, um die Ausgangswelle möglichst präzise auf Soll-Winkelpositionen zu verfahren. Der erste und der zweite Sensor dienen dabei als Istwertgeber, wobei der erste Sensor zur Grob- und der zweite Sensor zur Feinpositionieren genutzt wird. Der erste Sensor bietet auf Grund von Vibrationen und Krafteintrag bei einer ausgangsseitigen Lastbeaufschlagung keine ausreichende Präzision und Stabilität zur Feinpositionierung. Als Antriebsmotoren werden üblicherweise Elektromotoren und als erste und zweite Sensoren Drehgeber verwendet. Eine entsprechende Antriebseinheit ist beispielsweise aus KR 102061693 B1 bekannt. Aus JP 6334317 B ist ferner eine Antriebseinheit mit einem Sensor zum Detektieren der Dehnung der Ausgangswelle bekannt.

Nachteilig wird bei einem Verfahren der Ausgangswelle der flexible Ring in Form einer Torsion gedehnt, insbesondere während der Beschleunigung, wobei die Dehnung die von der Antriebswelle auf die Ausgangswelle übertragene Winkelposition überlagert. Der zweite Sensor ist insofern zumindest im Bereich einer Winkelstrecke, über die die Beschleunigung stattfindet, nicht zur ausreichend präzisen Regelung der Ausgangswellenposition geeignet, sondern zeigt von der Dehnung überlagerte Messwerte, die zu einem Überschießen der Winkelposition der Ausgangswelle führen. In einem Winkelbereich, der außerhalb dieser Winkelstrecke liegt, ist der zweite Sensor zur präzisen Regelung der Winkelposition der Ausgangswelle nur insofern geeignet, als die konstante Dehnung des flexiblen Rings bei der sich an die Beschleunigung anschließenden konstanten Geschwindigkeit bekannt ist.

DE 10 2018 125 079 A1 offenbart ein Spannungswellengetriebe, bei dem auf einem elastischen Übertragungselement ein Dehnungsmessstreifen angeordnet ist.

Eine Aufgabe der Erfindung ist es, eine Antriebseinheit vorzuschlagen, bei der die Winkelposition der Ausgangswelle präzise auf jede Soll-Winkelposition geregelt werden kann. Die Aufgabe wird gelöst durch ein Verfahren nach Anspruch 1. Vorteilhafte Ausgestaltungen ergeben sich aus den Unteransprüchen.

Als Beschleunigung wird eine Beschleunigung des Antriebsmotors verstanden, die über die Antriebswelle und das Spannungswellengetriebe an die Ausgangswelle übertragen wird. Es werden dabei alle beteiligten Bauteile beschleunigt und insbesondere der flexible Ring gedehnt. Ebenso wird als Geschwindigkeit im folgenden die jeweilige Geschwindigkeit aller Bauteile verstanden, wobei die Antriebswelle und der flexible Ring eine der Übersetzung des Spannungswellengetriebe entsprechende höhere Geschwindigkeit aufweisen als die Ausgangswelle.

Gemäß dem ersten Erfindungsaspekt ist die Antriebseinheit durch einen dritten Sensor zum Detektieren einer Dehnung des flexiblen Rings gekennzeichnet. Mittels dem ersten, dem zweiten und dem dritten Sensor sind alle Größen, die die Position der Ausgangswelle beeinflussen bekannt und es können darauf basierend Regelverfahren angewendet werden, die zu einer präzisen Positionierung der Ausgangswelle führen. Ein solches Verfahren ist ein Regelverfahren, in dem die vom dritten Sensor erfasste Dehnung unmittelbar als Istwert neben der vom zweiten Sensor erfassten Position der Ausgangswelle als Istwert herangezogen wird. Bei dem Regelverfahren ist ein Kalibrierverfahren vorgeschaltet und die daraus gewonnenen Informationen werden im Betrieb der Antriebseinheit zur Regelung mit nur der Ist-Winkelposition der Ausgangswelle als Istwert verwendet.

Der dritte Sensor kann beispielsweise ein Sensor zum Erfassen einer Relativposition gegenüber einem feststehenden Teil oder ein Dehnungsmessstreifen sein.

Gemäß einer bevorzugten Ausführung der Erfindung weist der flexible Ring einen sich radial erstreckenden Kragen auf und der dritte Sensor ist an dem Kragen angeordnet. Auf diese Weise ist der dritte Sensor vorteilhaft abseitig des Bereichs angeordnet, in dem der flexible Ring in Wirkverbindung mit dem Wellenerzeuger bzw. in Zahneingriff mit dem Zahnring steht. Weiterhin vorteilhaft ist an einem Kragen die Dehnung des flexiblen Rings sicher messbar.

**In** einer weiteren bevorzugten Ausführungsform ist der zweite Sensor an dem Zahnring angeordnet. Vorteilhaft ist er so an dem ersten abtriebsseitigen Element der Antriebsvorrichtung angeordnet, so dass die Position der Ausgangswelle unmittelbar an der Übersetzung erfasst wird. Weiterhin vorteilhaft ist die Antriebseinheit mit einem am Zahnring angeordneten zweiten Sensor mit einer Vielzahl verschiedener abtriebsseitiger Anbauteile verwendbar.

**In** einer weiteren bevorzugten Ausführungsform sind der Antriebsmotor, das Spannungswellengetriebe und der erste Sensor koaxial zur Antriebswelle angeordnet. Auf diese Weise ist eine kompakte Antriebseinheit geschaffen.

Erfindungsgemäß umfasst das Verfahren ein Kalibrierverfahren, in dem mittels des ersten, des zweiten und des dritten Sensors Winkelstrecken der Antriebswelle und der Ausgangswelle bei einer Beschleunigung ermittelt werden, über die zwischen der Winkelposition der Antriebswelle und der Winkelposition der Ausgangswelle auf Grund einer Dehnung des flexiblen Rings ein nicht-linearer Zusammenhang besteht. Über die so ermittelten Winkelstrecken ist dann bekannt, dass die Ist-Winkelposition der Ausgangswelle mittels des zweiten Sensors während der Beschleunigung nur ungenau erfassbar ist, da eine Überlagerung bzw. Verfälschung der Winkelposition durch eine nicht präzise erfassbare Dehnung des flexiblen Rings stattfindet. Diese Information kann dann im Folgenden bei der Positionierung der Ausgangswelle berücksichtigt werden. Ein präzises Ansteuern einer Soll-Winkelposition, die ausgehend von der Ist-Winkelposition innerhalb einer solchen Winkelstrecke liegt, ist mit dem zweiten Sensor als Istwertgeber nicht möglich und bedarf einer geänderten Regelstrategie.

Das Kalibrierverfahren wird lediglich einmalig ausgeführt, um alle relevanten Werte zu erfassen. Bevorzugt wird das Kalibierverfahren an einer Antriebseinheit ausgeführt, die sich in der Einbausituation befindet, in der im Folgenden die Positionierung der Ausgangswelle durchgeführt werden soll, also unter Betriebsbedingungen. Der Einfluss von an der Antriebseinheit angebauten Bauteilen und sonstigen Umgebungsbedingungen ist dann mitberücksichtigt. Bevorzugt wird das Kalibrierverfahren in regelmäßigen zeitlichen Abständen und/oder nach einer definierten Anzahl an Positioniervorgängen erneut durchgeführt.

In dem Kalibierverfahren werden Winkelstrecken einerseits für die Antriebswelle und andererseits für die Ausgangswelle erfasst. Die Winkelstrecke der Antriebswelle steht dabei mit der Winkelstrecke der Ausgangswelle über die Übersetzung des Spannungswellengetriebes und die Dehnung des flexiblen Rings in Zusammenhang.

Das Kalibierverfahren wird mit einer definierten Beschleunigung durchgeführt, die so auch im Folgenden zur Positionierung der Ausgangswelle insbesondere ausschließlich angewendet wird, denn die erfasste Winkelstrecke ist für eine solche Beschleunigung spezifisch. Es ist alternativ auch möglich, aus den gewonnenen Informationen weitere Winkelstrecken für weitere Beschleunigungsprofile zu inter- oder extrapolieren.

Weiterhin erfindungsgemäß umfasst das Verfahren ein Positionierverfahren zum Regeln der Winkelposition der Ausgangswelle aus einer Ist-Winkelposition in eine Soll-Winkelposition mit dem zweiten Sensor als Istwertgeber, wobei überprüft wird, ob zwischen der Ist-Winkelposition und der Soll-Winkelposition zumindest die ermittelte Winkelstrecke der Ausgangswelle liegt, und falls dies nicht gegeben ist, die Ausgangswelle rotiert wird, bis die Ist-Winkelposition um mindestens die ermittelte Winkelstrecke der Ausgangswelle von der Soll-Winkelposition beabstandet ist, und anschließend die Ist-Winkelposition auf die Soll-Winkelposition mittels des zweiten Sensors eingeregelt wird. Auf diese Weise ist sichergestellt, dass zu keinem Zeitpunkt eine Soll-Winkelposition eingeregelt werden muss, die sich innerhalb der Winkelstrecke befindet, in der eine präzise Regelung nicht möglich wäre. Vorteilhaft muss die Dehnung des flexiblen Rings dazu nicht dauerhaft erfasst und bei der Regelung verarbeitet werden. Das Positionierverfahren wird bei jeder neuen Soll-Winkelstellung der Ausgangswelle im Dauerbetrieb der Antriebseinheit durchgeführt.

In einer Ausführungsform wird neben dem zweiten Sensor auch der erste Sensor zumindest hilfsweise als Istwertgeber verwendet. Insbesondere wird der erste Sensor verwendet, um die Ausgangswelle aus der ersten Ist-Winkelposition in eine Ist-Winkelposition zu verfahren, die um mindestens die ermittelte Winkelstrecke der Ausgangswelle von der Soll-Winkelposition beabstandet ist. Auf diese Weise unterliegt dieser vorgeschaltete Positioniervorgang nicht der Beschränkung, dass er größer als die erfasste Winkelstrecke der Ausgangswelle sein muss.

In dem Kalibierverfahrei wird zuerst eine Dehnung des flexiblen Rings von 0% eingestellt und werden als erste Winkelpositionen die Winkelposition der Antriebswelle mittels des ersten Sensors und die Winkelposition der Ausgangswelle mittels des zweiten Sensors erfasst. Daraufhin wird die Ausgangswelle definiert in eine erste Drehrichtung auf eine erste Geschwindigkeit beschleunigt, wobei als zweite Winkelpositionen die Winkelposition der Antriebswelle mittels des ersten Sensors und die Winkelposition der Ausgangswelle mittels des zweiten Sensors erfasst werden, sobald der dritte Sensor eine konstante Dehnung des flexiblen Rings detektiert. Es werden dann als gleichgerichtete Winkelstrecken jeweils die Strecke zwischen der ersten erfassten Winkelposition und der zweiten erfassten Winkelposition definiert. Der Begriff "gleichgerichtet" bezieht sich auf eine Rotation im Verhältnis zu einer vorausgegangenen Rotation und wird so verstanden, dass die Rotation sowie die vorausgehende Rotation in die gleiche Richtung verlaufen. Eine gleichgerichtete Winkelstrecke ist die Winkelstrecke, innerhalb derer eine präzise Regelung mit dem zweiten Sensor als Istwertgeber nicht möglich ist, wenn der zu regelnden Rotation eine Rotation in die gleiche Richtung vorausging.

In einer weiteren Ausgestaltung dieser Ausführungsform des Verfahrens wird anschließend die Ausgangswelle angehalten und als dritte Winkelpositionen die Winkelposition der Antriebswelle mittels des ersten Sensors und die Winkelposition der Ausgangswelle mittels des zweiten Sensors erfasst. Daraufhin wird die Ausgangswelle in eine zweite Drehrichtung rotiert und wieder angehalten, sobald der dritte Sensor eine Dehnung des flexiblen Rings von 0% detektiert, wobei bei Stillstand als vierte Winkelposition die Winkelposition der Antriebswelle mittels des ersten Sensors und die Winkelposition der Ausgangswelle mittels des zweiten Sensors erfasst werden. Daraufhin wird die Ausgangswelle definiert in die zweite Richtung beschleunigt, wobei als fünfte Winkelposition die Winkelposition der Antriebswelle mittels des ersten Sensors und die Winkelposition der Ausgangswelle mittels des zweiten Sensors erfasst werden, sobald der dritte Sensor eine unveränderte Dehnung des flexiblen Rings detektiert. Es werden dann als gegengerichtete Winkelstrecken jeweils die Strecke zwischen der dritten erfassten Winkelposition und der fünften erfassten Winkelposition definiert. Der Begriff "gegengerichtet" bezieht sich auf eine Rotation im Verhältnis zu einer vorausgegangenen Rotation und wird so verstanden, dass die Rotation sowie die vorausgehende Rotation in entgegengesetzte Richtungen verlaufen. Eine gegengerichtete Winkelstrecke ist die Winkelstrecke, innerhalb derer eine präzise Regelung mit dem zweiten Sensor als Istwertgeber nicht möglich ist, wenn der zu regelnden Rotation eine Rotation in die entgegengesetzte Richtung vorausging.

Die gleichgerichtete und die gegengerichtete Winkelstrecke unterscheiden sich insofern voneinander, als dass sich auf Grund der üblicherweise sehr geringen Federkonstante des flexiblen Rings nach dem Beschleunigen eine konstante Dehnung in dem flexiblen Ring einstellt, die auch nicht aufgelöst wird, wenn die Antriebswelle wieder stillsteht. Diese konstante Dehnung wird daher als verbleibende Dehnung bezeichnet. Wird der flexible Ring zuerst in die erste Richtung und anschießend in die zweite Richtung beschleunigt, so muss sich die verbleibende Dehnung aus der ersten Rotation zuerst auflösen, sobald eine Dehnung des flexiblen Rings durch die Beschleunigung in der zweiten Richtung entsteht. Aus diesem Grund sind die gleichgerichtete Winkelstrecken, bei deren Beschleunigung die verbleibende Dehnung in der entsprechenden Richtung bereits besteht, kürzer als die entgegengesetzten Winkelstrecken, bei denen die verbleibende Dehnung aus der vorherigen Rotation zuerst aufgelöst werden muss.

Vorteilhaft kann nach Erfassen der gleichgerichteten und der gegengerichteten Winkelstrecken im Positionierverfahren bei der Überprüfung des Abstands zwischen Ist-Winkelposition und Soll-Winkelposition abhängig von der Drehrichtung bei einer vorausgegangenen Rotation der Ausgangswelle die gleichgerichtet oder die gegengerichtete Winkelstrecke der Ausgangswelle zugrunde gelegt werden. So ist immer die kürzt mögliche Winkelstrecke bei der Überprüfung zu Grunde gelegt, so dass ein unnötiges Beabstanden der Ist-Winkelposition von der Soll-Winkelposition vermieden wird.

**In** einer weiteren bevorzugten Ausführungsform des Verfahrens wird als verbleibende Dehnung die mit der Übersetzung normalisierte Differenz zwischen der Strecke zwischen der dritten erfassten Winkelposition und der vierten erfassten Winkelposition der Antriebswelle und der Strecke zwischen der dritten erfassten Winkelposition und der vierten erfassten Winkelposition der Ausgangswelle definiert. Vorteilhaft ist die verbleibende Dehnung bei der definierten Beschleunigung dann bekannt und zur Korrektur der Messwerte des zweiten Sensors verwendbar.

In einer bevorzugten Ausführungsform wird in dem Positionierverfahren die Ausgangswelle in die gleiche Drehrichtung rotiert, wie in einer unmittelbar vorausgehenden Rotation, um die Ist-Winkelposition um mindestens die ermittelte Winkelstrecke von der Soll-Winkelposition zu beabstanden. Es ist so ein zusätzlicher Richtungswechsel vermieden. Insbesondere kann zur Beabstandung der Ist-Winkelposition von der Soll-Winkelposition der erste Sensor als Istwertgeber verwendet werden, da hier eine Grobpositionierung ausreicht ist und die Messwerte des ersten Sensor durch keine Dehnung des flexiblen Rings überlagert werden.

In einer weiteren bevorzugten Ausführungsform wird in dem Positionierverfahren bei der Überprüfung des Abstands zwischen Ist-Winkelposition und Soll-Winkelposition abhängig von der Drehrichtung bei einer vorausgegangenen Rotation der Ausgangswelle die gleichgerichtet oder die gegengerichtete Winkelstrecke zugrunde gelegt. Wie bereits vorbeschrieben, ist so immer die kürzt mögliche Winkelstrecke bei der Überprüfung zu Grunde gelegt, so dass ein unnötiges Beabstanden der Ist-Winkelposition von der Soll-Winkelposition vermieden wird.

Weitere die Erfindung verbessernde Maßnahmen werden nachstehend gemeinsam mit der Beschreibung bevorzugter Ausführungsbeispiele der Erfindung anhand der Figuren näher dargestellt. Dabei zeigt
- Figur 1: einen schematischen Querschnitt einer erfindungsgemäßen Antriebseinheit;
- Figur 2: ein Diagramm der Winkelposition der Ausgangswelle auf der ersten y-Achse über der Winkelposition der Antriebswelle auf der x-Achse sowie der Dehnung des flexiblen Rings auf der zweiten y-Achse bei einer Beschleunigung;
- Figur 3: ein Diagramm der Winkelposition der Ausgangswelle auf der ersten y-Achse über der Winkelposition der Antriebswelle auf der x-Achse sowie des Moments in dem flexiblen Ring auf der zweiten y-Achse bei einer Beschleunigung;
- Figur 4: eine schematische Darstellung eines erfindungsgemäßen Positionierverfahrens der Ausgangwelle bei ausreichendem Abstand zwischen Ist-Winkelposition und Soll-Winkelposition bei gleichgerichteter Rotation;
- Figur 5: eine schematische Darstellung eines erfindungsgemäßen Positionierverfahrens der Ausgangwelle bei ausreichendem Abstand zwischen Ist-Winkelposition und Soll-Winkelposition bei gegengerichteter Rotation;
- Figur 6: eine schematische Darstellung eines erfindungsgemäßen Positionierverfahrens der Ausgangwelle bei nicht ausreichendem Abstand zwischen Ist-Winkelposition und Soll-Winkelposition bei gleichgerichteter Rotation;
- Figur 7: eine schematische Darstellung eines erfindungsgemäßen Positionierverfahrens der Ausgangwelle bei nicht ausreichendem Abstand zwischen Ist-Winkelposition und Soll-Winkelposition bei gegengerichteter Rotation; und
- Figur 8: eine stark vereinfachte Darstellung eines Roboterarms mit einer erfindungsgemäßen Antriebseinheit.

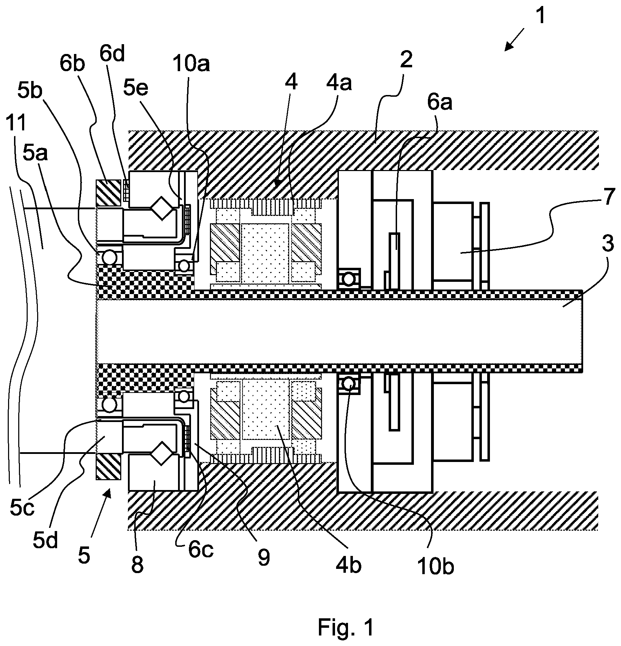

Figur 1 zeigt eine Antriebseinheit 1 mit einem diese nach außen begrenzenden Gehäuse 2. Innerhalb des Gehäuses 2 ist mittels Kugellagern 10a, 10b eine Antriebswelle 3 gelagert, die von einem Antriebsmotor 4 mit einem Stator 4a und einem Rotor 4b antreibbar ist. Weiterhin ist auf der Antriebswelle 3 ein Spannungswellengetriebe 5 angeordnet, dass eine Drehbewegung der Antriebswelle 3 in eine langsamere Drehbewegung eines Abtriebs wandelt. Das Spannungswellengetriebe 5 weist eine hohe Übersetzung und Steifigkeit auf. An der Antriebswelle 3 ist weiterhin ein erster Sensor 6a angeordnet, der eine Winkelposition Θᵢ der Antriebswelle 3 erfasst. Der erste Sensor 6a ist hier als Drehgeber ausgeführt. Auf die Antriebswelle 3 wirkt zudem eine Bremse 7, mittels der die Antriebswelle 3 abbremsbar ist.

Das Spannungswellengetriebe 5 weist einen Wellenerzeuger 5a, einen gegenüber dem Wellenerzeuger 5a mittels eines Kugellagers 5b gelagerten flexiblen Ring 5c und einen Zahnring 5d auf. Der Wellenerzeuger 5a ist unmittelbar an der Antriebswelle 3 ausgebildet, während der Zahnring 5d den Abtrieb des Spannungswellengetriebes 5 bildet und mit einer Ausgangswelle 11 verbunden bzw. verbindbar ist. An dem Zahnring 5d ist ein zweiter Sensor 6b angeordnet, der eine Winkelposition Θₒ des Zahnrings 5d, die gleichzeitig die Winkelposition der Ausgangswelle 11 ist, erfasst. Dazu erfasst der zweite Sensor 6b die Winkelposition Θₒ des Zahnrings 5d gegenüber einem entsprechenden Sensorteil 6d an dem feststehenden gehäuseseitigen Bauteil 8. Der flexible Ring 5c weist einen Kragen 5e auf, mittels dem er an dem Gehäuse 2 festgelegt ist. An dem Kragen 5e ist ein dritter Sensor 6c angeordnet, mittels dem eine Dehnung ω im Sinne einer Torsion des flexiblen Rings 5c erfasst wird. Dazu wird eine Relativverschiebung eines Messpunkts an dem flexiblen Ring 5c gegenüber dem feststehenden gehäuseseitigen Bauteil 9 erfasst.

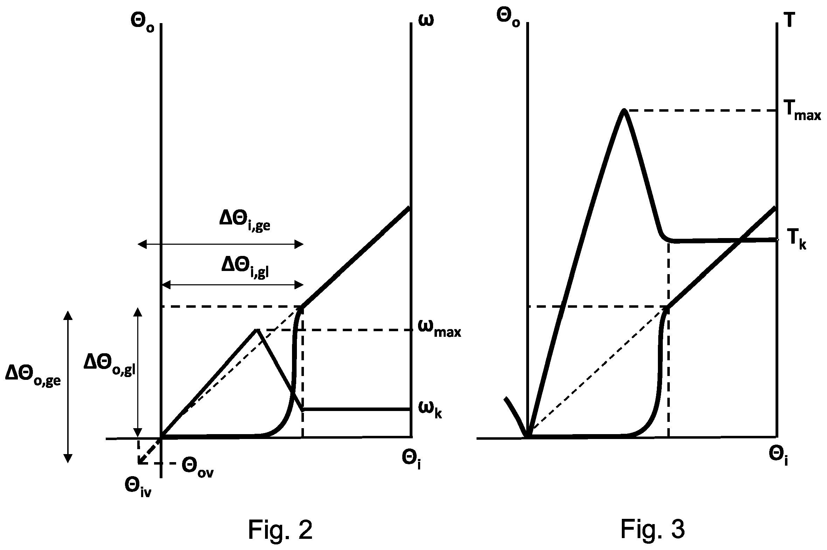

Die Figuren 2 und 3 zeigen den Verlauf der Winkelposition Θᵢ der Antriebswelle 3 und der Winkelposition Θₒ der Ausgangswelle 11 (bzw. dem Zahnring 5d) sowie den Verlauf der Dehnung ω des flexiblen Rings in Figur 2 und den Verlauf des Moments T im flexiblen Ring 5c in Figur 3 bei einer Beschleunigung. Das Moment T bzw. die Dehnung ω in dem flexiblen Ring 5c baut sich während der Beschleunigung bis zu einer maximalen Dehnung ωₘₐₓ und einem maximalen Moment Tₘₐₓ auf, wobei die Winkelposition Θₒ der Ausgangswelle 11 sich noch nicht ändert bzw. der Winkelposition Θᵢ der Antriebswelle 3 nachläuft. Erreicht die Beschleunigung eine konstante Zielgeschwindigkeit, baut sich das Moment T bzw. die daraus resultierende Dehnung ω ab, bis sie konstante Werte ωₖ bzw. Tₖ erreicht. Bis zu diesem Punkt besteht ein nicht-linearer Zusammenhang zwischen der Winkelposition Θᵢ der Antriebswelle 3 und der Winkelposition Θₒ der Ausgangswelle 11, der es unmöglich macht, eine Positionierung der Ausgangswelle 11 lediglich mit den Werten des zweiten Sensors 6b als Istwertgeber präzise zu regeln. Ab diesem Punkt besteht wieder ein linearer Zusammenhang zwischen der Winkelposition Θᵢ der Antriebswelle 3 und der Winkelposition Θₒ der Ausgangswelle 11. Alle dahinter liegenden Winkelposition Θₒ der Ausgangswelle 11 können mittels dem zweiten Sensor 6b als Istwertgeber eingeregelt werden.

Es ergibt sich bei einer gleichgerichteten Beschleunigung eine Winkelstrecke ΔΘ_{i,gl} der Antriebswelle 3 zwischen dem Nullpunkt und dem Punkt, an dem ωₖ bzw. Tₖ erreicht ist, über die zwischen der Winkelposition Θᵢ der Antriebswelle und der Winkelposition Θₒ der Ausgangswelle 11 auf Grund einer Dehnung des flexiblen Rings 5c ein nicht-linearer Zusammenhang besteht. Für die Ausgangswelle 11 ergibt sich eine Winkelstrecke ΔΘ_{o,gl} zwischen dem Nullpunkt und dem Punkt, an dem ωₖ bzw. Tₖ erreicht ist, über die zwischen der Winkelposition der Antriebswelle und der Winkelposition der Ausgangswelle 11 auf Grund einer Dehnung des flexiblen Rings 5c ein nicht-linearer Zusammenhang besteht.

Bei einer gegengerichteten Beschleunigung muss zusätzlich die verbleibende Dehnung, die der konstanten Dehnung ωₖ entspricht, aus der vorhergehenden Rotation abgebaut werden. Es ergibt sich dann eine Winkelstrecke ΔΘ_{i,ge} der Antriebswelle 3 zwischen dem der verbleibenden Dehnung entsprechenden Punkt Θᵢᵥ und dem Punkt, an dem ωₖ erreicht ist, über die zwischen der Winkelposition Θᵢ der Antriebswelle 3 und der Winkelposition Θₒ der Ausgangswelle 11 auf Grund einer Dehnung des flexiblen Rings 5c ein nicht-linearer Zusammenhang besteht. Für die Ausgangswelle 11 ergibt sich eine Winkelstrecke ΔΘ_{o,ge} zwischen dem der verbleibenden Dehnung entsprechenden Punkt Θₒᵥ und dem Punkt an dem ωₖ erreicht ist, über die zwischen der Winkelposition Θᵢ der Antriebswelle 3 und der Winkelposition Θₒ der Ausgangswelle 11 auf Grund einer Dehnung des flexiblen Rings 5c ein nicht-linearer Zusammenhang besteht.

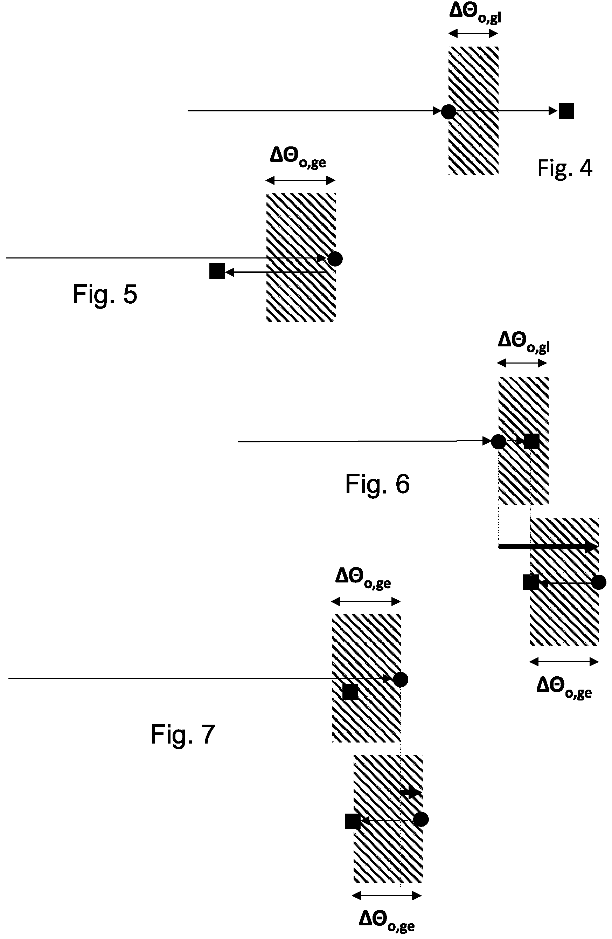

Die Figuren 4 bis 7 zeigen Positionierverfahren der Ausgangswelle 11 für verschiedenen Fälle in Abhängigkeit davon, ob jeweils zwischen der Ist-Winkelposition und der Soll-Winkelposition mindestens die Winkelstrecke ΔΘ_{o,gl}, ΔΘ_{o,ge} der Ausgangswelle 11 liegt (Figuren 4 und 5) oder nicht (Figuren 6 und 7). Weiterhin werden Fälle in Abhängigkeit davon betrachtet, ob die Soll-Winkelposition von der Ist-Winkelposition gesehen gleichgerichtet (Figuren 4 und 6) oder gegengerichtet (Figuren 5 und 7) gelegen ist. Die Ist-Winkelposition ist dabei jeweils als runder Punkt dargestellt und die Soll-Winkelposition als eckiger Punkt.

Bei dem Fall nach Figur 4, bei dem die Soll-Winkelposition gleichgerichtet zur Ist-Winkelposition liegt, wird überprüft, ob die Ist-Winkelposition und die Soll-Winkelposition um mindestens die gleichgerichtete Winkelstrecke ΔΘ_{o,gl} der Ausgangswelle 11 voneinander beabstandet sind. Da festgestellt wird, dass dies der Fall ist, wird die Ausgangswelle 11 unmittelbar auf die Soll-Winkelstellung verfahren.

Bei dem Fall nach Figur 5, bei dem die Soll-Winkelposition gegengerichtet zur Ist-Winkelposition liegt, wird überprüft, ob die Ist-Winkelposition und die Soll-Winkelposition um mindestens die gegengerichtete Winkelstrecke ΔΘ_{o,ge} der Ausgangswelle 11 voneinander beabstandet sind. Da festgestellt wird, dass dies der Fall ist, wird die Ausgangswelle 11 unmittelbar auf die Soll-Winkelstellung verfahren.

Bei dem Fall nach Figur 6, bei dem die Soll-Winkelposition gleichgerichtet zur Ist-Winkelposition liegt, wird überprüft, ob die Ist-Winkelposition und die Soll-Winkelposition um mindestens die gleichgerichtete Winkelstrecke ΔΘ_{o,gl} der Ausgangswelle 11 voneinander beabstandet sind. Da festgestellt wird, dass dies nicht der Fall ist, wird die Ausgangswelle 11 zuerst in der gleichgerichteten Drehrichtung auf eine neue Ist-Winkelposition verfahren, die um mindestens die gegengerichtete Winkelstrecke ΔΘ_{o,ge} der Ausgangswelle 11 von der Soll-Winkelposition beabstandet ist. Anschließend wird die Ausgangswelle 11 auf die Soll-Winkelstellung verfahren.

Bei dem Fall nach Figur 7, bei dem die Soll-Winkelposition gegengerichtet zur Ist-Winkelposition liegt, wird überprüft, ob die Ist-Winkelposition und die Soll-Winkelposition um mindestens die gegengerichtete Winkelstrecke ΔΘ_{o,ge} der Ausgangswelle 11 voneinander beabstandet sind. Da festgestellt wird, dass dies nicht der Fall ist, wird die Ausgangswelle 11 zuerst in der gleichgerichteten Drehrichtung auf eine neue Ist-Winkelposition verfahren, die um mindestens die gegengerichtete Winkelstrecke ΔΘ_{o,ge} der Ausgangswelle 11 von der Soll-Winkelposition beabstandet ist. Anschließend wird die Ausgangswelle 11 auf die Soll-Winkelstellung verfahren.

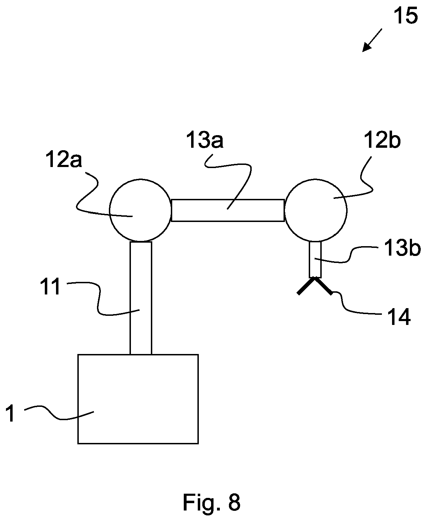

Figur 8 zeigt einen Roboter 15 in Form eines Roboterarms mit der Antriebseinheit 1 zum Antrieb der Ausgangswelle 11. Über ein erstes Gelenk 12a und ein zweites Gelenk 12b sind eine erste weitere Welle 13a und eine zweite weitere Welle 13b mit der Antriebseinheit 1 verbunden. An der zweiten weiteren Welle 13b ist beispielhaft ein Greifwerkzeug 14 angeordnet. In den Gelenken 12a, 12b können weitere erfindungsgemäße Antriebsvorrichtungen 1 angeordnet sein, um jeweils die weiteren Wellen 12a, 12b zu steuern.

### Bezugszeichenliste

- 1: Antriebseinheit
- 2: Gehäuse
- 3: Antriebswelle
- 4: Antriebsmotor
- 4a: Stator
- 4a: Rotor
- 5: Spannungswellengetriebe
- 5a: Wellenerzeuger
- 5b: Kugellager
- 5c: flexibler Ring
- 5d: Zahnring
- 5e: Kragen des flexiblen Rings
- 6a: erster Sensor
- 6b: zweiter Sensor
- 6c: dritter Sensor
- 6d: Sensorteil
- 7: Bremse
- 8: feststehendes gehäuseseitiges Bauteil
- 9: feststehendes gehäuseseitiges Bauteil
- 10a: Kugellager
- 10b: Kugellager
- 11: Ausgangswelle
- 12a: erstes Gelenk
- 12b: zweites Gelenk
- 13a: erste weitere Welle
- 13b: zweite weitere Welle
- 14: Greifwerkzeug
- 15: Roboter
- Θᵢ: Winkelpositionen der Antriebswelle
- Θᵢᵥ: der verbleibenden Dehnung entsprechender Punkt
- ΔΘ_{i,gl}: gleichgerichtete Winkelstrecke der Antriebswelle
- ΔΘ_{i,ge}: gegengerichtete Winkelstrecke der Antriebswelle
- Θₒ: Winkelpositionen der Ausgangswelle
- Θₒᵥ: der verbleibenden Dehnung entsprechender Punkt
- ΔΘ_{o,gl}: gleichgerichtete Winkelstrecke der Ausgangswelle
- ΔΘ_{o,ge}: gegengerichtete Winkelstrecke der Ausgangswelle
- ω: Dehnung des flexiblen Rings
- ωₘₐₓ: maximale Dehnung des flexiblen Rings
- ωk: konstante Dehnung des flexiblen Rings
- T: Moment im flexiblen Ring
- Tₘₐₓ: maximales Moment im flexiblen Ring
- Tk: konstantes Moment im flexiblen Ring

## Patentansprüche

1. Verfahren zum Regeln einer Winkelposition (Θₒ) einer Ausgangswelle (11) bei einer Positionierung mittels eines Antriebsmotors (4) über eine Antriebswelle (3) und ein Spannungswellengetriebe (5) bei einer Antriebseinheit (1) für einen Roboter (15), die Antriebseinheit (1) aufweisend die Antriebswelle (3), den Antriebsmotor (4) zum Antreiben der Antriebswelle (3) und das Spannungswellengetriebe (5) zum Übersetzen der Antriebswelle (3) auf die Ausgangswelle (11), wobei das Spannungswellengetriebe (5) einen mit der Antriebswelle (3) wirkverbundenen Wellenerzeuger (5a), einen flexiblen Ring (5c) und einen mit der Ausgangswelle (11) verbindbaren Zahnring (5d) aufweist, die Antriebseinheit (1) umfassend einen ersten Sensor (6a) zum Detektieren einer Winkelposition (Θᵢ) der Antriebswelle (3), einen zweiten Sensor (6b) zum Detektieren einer Winkelposition (Θₒ) der Ausgangswelle (11) und einen dritten Sensor (6c) zum Detektieren einer Dehnung (ω) des flexiblen Rings (5c),
das Verfahren umfassend
- ein Kalibrierverfahren, in dem mittels des ersten, des zweiten und des dritten Sensors (6a, 6b, 6c) Winkelstrecken (ΔΘ_{i,gl}, ΔΘ_{i,ge}, ΔΘ_{o,gl}, ΔΘ_{o,ge}) der Antriebswelle (3) und der Ausgangswelle (11) bei einer Beschleunigung des Antriebsmotors (4) ermittelt werden, über die zwischen der Winkelposition (Θᵢ) der Antriebswelle (3) und der Winkelposition (Θₒ) der Ausgangswelle (11) auf Grund einer Dehnung (ω) des flexiblen Rings (5c) ein nicht-linearer Zusammenhang besteht, wobei zuerst eine Dehnung (ω) des flexiblen Rings (5c) von 0% eingestellt wird und als erste Winkelpositionen (Θᵢ, Θₒ) die Winkelposition (Θᵢ) der Antriebswelle (3) mittels des ersten Sensors (6a) und die Winkelposition (Θₒ) der Ausgangswelle (11) mittels des zweiten Sensors (6b) erfasst werden, wobei daraufhin die Ausgangswelle (11) definiert in eine erste Drehrichtung auf eine erste Geschwindigkeit beschleunigt wird, wobei als zweite Winkelpositionen (Θᵢ, Θₒ) die Winkelposition (Θᵢ) der Antriebswelle (3) mittels des ersten Sensors (6a) und die Winkelposition (Θₒ) der Ausgangswelle (11) mittels des zweiten Sensors (6b) erfasst werden, sobald der dritte Sensor (6c) eine konstante Dehnung (ω) des flexiblen Rings (5c) detektiert und wobei als gleichgerichtete Winkelstrecken (ΔΘ_{i,gl}, ΔΘ_{o,gl}) jeweils die Strecke zwischen der ersten erfassten Winkelposition (Θᵢ, Θₒ) und der zweiten erfassten Winkelposition (Θᵢ, Θₒ) definiert werden,
- ein Positionierverfahren zum Regeln der Winkelposition (Θₒ) der Ausgangswelle (11) aus einer Ist-Winkelposition in eine Soll-Winkelposition mit dem zweiten Sensor (6b) als Istwertgeber, wobei überprüft wird, ob zwischen der Ist-Winkelposition und der Soll-Winkelposition zumindest die ermittelte Winkelstrecke (ΔΘ_{o,gl}, ΔΘ_{o,ge}) der Ausgangswelle (11) liegt, und falls dies nicht gegeben ist, die Ausgangswelle (11) rotiert wird, bis die Ist-Winkelposition um mindestens die ermittelte Winkelstrecke (ΔΘ_{o,gl}, ΔΘ_{o,ge}) der Ausgangswelle (11) von der Soll-Winkelposition beabstandet ist, und anschließend die Ist-Winkelposition auf die Soll-Winkelposition mittels des zweiten Sensors (6b) eingeregelt wird.

2. Verfahren nach Anspruch 1,
**dadurch gekennzeichnet, dass** anschließend
- die Ausgangswelle (11) angehalten wird und als dritte Winkelpositionen (Θᵢ, Θₒ) die Winkelposition (Θᵢ) der Antriebswelle (3) mittels des ersten Sensors (6a) und die Winkelposition (Θₒ) der Ausgangswelle (11) mittels des zweiten Sensors (6b) erfasst werden,
- daraufhin die Ausgangswelle (11) in eine zweite Drehrichtung rotiert wird und wieder angehalten wird, sobald der dritte Sensor (6c) eine Dehnung (ω) des flexiblen Rings (5c) von 0% detektiert, wobei bei Stillstand als vierte Winkelpositionen (Θᵢ, Θₒ) die Winkelposition (Θᵢ) der Antriebswelle (3) mittels des ersten Sensors (6a) und die Winkelposition (Θₒ) der Ausgangswelle (11) mittels des zweiten Sensors (6b) erfasst werden
- daraufhin die Ausgangswelle (11) definiert in die zweite Richtung beschleunigt wird, wobei als fünfte Winkelpositionen (Θᵢ, Θₒ) die Winkelposition (Θᵢ) der Antriebswelle (3) mittels des ersten Sensors (6a) und die Winkelposition (Θₒ) der Ausgangswelle (11) mittels des zweiten Sensors (6b) erfasst werden, sobald der dritte Sensor (6c) eine unveränderte Dehnung (ω) des flexiblen Rings (5c) detektiert,
- als gegengerichtete Winkelstrecken (ΔΘ_{i,ge}, ΔΘ_{o,ge}) jeweils die Strecke zwischen der dritten erfassten Winkelposition (Θᵢ, Θₒ) und der fünften erfassten Winkelposition (Θᵢ, Θₒ) definiert werden.

3. Verfahren nach Anspruch 2,
**dadurch gekennzeichnet, dass** als verbleibende Dehnung (ω) die Differenz zwischen der Strecke zwischen der dritten erfassten Winkelposition (Θᵢ) und der vierten erfassten Winkelposition (Θᵢ) der Antriebswelle (3) und der Strecke zwischen der dritten erfassten Winkelposition (Θₒ) und der vierten erfassten Winkelposition (Θₒ) der Ausgangswelle (11) definiert wird.

4. Verfahren nach einem der Ansprüche 1 bis 3,
**dadurch gekennzeichnet, dass** in dem Positionierverfahren die Ausgangswelle (11) in die gleiche Drehrichtung rotiert wird, wie in einer unmittelbar vorausgehenden Rotation, um die Ist-Winkelposition um mindestens die ermittelte Winkelstrecke (ΔΘ_{o,gl}, ΔΘ_{o,ge}) von der Soll-Winkelposition zu beabstanden.

5. Verfahren nach einem der Ansprüche 1 bis 4,
**dadurch gekennzeichnet, dass** in dem Positionierverfahren bei der Überprüfung des Abstands zwischen Ist-Winkelposition und Soll-Winkelposition abhängig von der Drehrichtung bei einer vorausgegangenen Rotation der Ausgangswelle (11) die gleichgerichtete oder die gegengerichtete Winkelstrecke (ΔΘ_{o,gl}, ΔΘ_{o,ge}) zugrunde gelegt wird.

## Claims

1. A method for adjusting an angular position (Θₒ) of an output shaft (11) during positioning by means of a drive motor (4) via a drive shaft (3) and a strain wave gear mechanism (5) in a drive unit (1) for a robot (15), the drive unit (1) having the drive shaft (3), the drive motor (4) for driving the drive shaft (3), and the strain wave gear mechanism (5) for transmitting the rotation of the drive shaft (3) to the output shaft (11), wherein the strain wave gear mechanism (5) has a wave generator (5a) operatively connected to the drive shaft (3), a flexspline (5c), and a circular spline (5d) that can be connected to the output shaft (11), the drive unit (1) comprising a first sensor (6a) for detecting an angular position (Θᵢ) of the drive shaft (3), a second sensor (6b) for detecting an angular position (Θₒ) of the output shaft (11), and a third sensor (6c) for detecting a strain (ω) of the flexspline (5c), the method comprising
- a calibration method in which angular distances (ΔΘ_{i,gl}, ΔΘ_{i,ge}, ΔΘ_{o,gl}, ΔΘ_{o,ge}) of the drive shaft (3) and the output shaft (11) are determined by means of the first, second and third sensors (6a, 6b, 6c) during acceleration of the drive motor (4), via which a non-linear relationship between the angular position (Θᵢ) of the drive shaft (3) and the angular position (Θₒ) of the output shaft (11) exists due to a strain (ω) of the flexspline (5c), wherein a strain (ω) of the flexspline (5c) of 0% is adjusted first and the angular position (Θᵢ) of the drive shaft (3) is acquired by means of the first sensor (6a) and the angular position (Θₒ) of the output shaft (11) is acquired by means of the second sensor (6b) as first angular positions (Θᵢ, Θₒ), wherein thereupon the output shaft (11) is accelerated in a defined manner in a first direction of rotation to a first speed, wherein the angular position (Θᵢ) of the drive shaft (3) is acquired by means of the first sensor (6a) and the angular position (Θₒ) of the output shaft (11) is acquired by means of the second sensor (6b) as second angular positions (Θᵢ, Θₒ) as soon as the third sensor (6c) detects a constant strain (ω) of the flexspline (5c), and wherein the distances between the first acquired angular position (Θᵢ, Θₒ) and the second acquired angular position (Θᵢ, Θₒ) are defined as equal-direction angular distances (ΔΘ_{i,gl}, ΔΘ_{o,gl}) in each case,
- a positioning method for adjusting the angular position (Θₒ) of the output shaft (11) from an actual angular position to a target angular position using the second sensor (6b) as an actual value transmitter, wherein a check is performed to determine whether at least the determined angular distance (ΔΘ_{o,gl}, ΔΘ_{o,ge}) of the output shaft (11) lies between the actual angular position and the target angular position, and if this is not the case, the output shaft (11) is rotated until the actual angular position is distanced from the target angular position by at least the determined angular distance (ΔΘ_{o,gl}, ΔΘ_{o,ge}) of the output shaft (11) and then the actual angular position is adjusted to the target angular position by means of the second sensor (6b).

2. The method according to claim 1, **characterized in that** subsequently
- the output shaft (11) is stopped and the angular position (Θᵢ) of the drive shaft (3) is acquired by means of the first sensor (6a) and the angular position (Θₒ) of the output shaft (11) is acquired by means of the second sensor (6b) as third angular positions (Θᵢ, Θₒ),
- whereupon the output shaft (11) is rotated in a second direction of rotation and stopped again as soon as the third sensor (6c) detects a strain (ω) of the flexspline (5c) of 0%, wherein at a standstill, the angular position (Θᵢ) of the drive shaft (3) is acquired by means of the first sensor (6a) and the angular position (Θₒ) of the output shaft (11) is acquired by means of the second sensor (6b) as fourth angular positions (Θᵢ, Θₒ),
- whereupon the output shaft (11) is accelerated in a defined manner in the second direction, wherein the angular position (Θᵢ) of the drive shaft (3) is acquired by means of the first sensor (6a) and the angular position (Θₒ) of the output shaft (11) is acquired by means of the second sensor (6b) as fifth angular positions (Θᵢ, Θₒ) as soon as the third sensor (6c) detects an unchanged strain (ω) of the flexspline (5c),
- the distances between the third acquired angular position (Θᵢ, Θₒ) and the fifth acquired angular position (Θᵢ, Θₒ) are defined as opposite-direction angular distances (ΔΘ_{i,ge}, ΔΘ_{o,ge}) in each case.

3. The method according to claim 2, **characterized in that** the remaining strain (ω) is defined as the difference between the distance between the third acquired angular position (Θᵢ) and the fourth acquired angular position (Θᵢ) of the drive shaft (3) and the distance between the third acquired angular position (Θₒ) and the fourth acquired angular position (Θₒ) of the output shaft (11).

4. The method according to any one of claims 1 to 3, **characterized in that,** in the positioning method, the output shaft (11) is rotated in the same direction of rotation as in an immediately preceding rotation in order to distance the actual angular position from the target angular position by at least the determined angular distance (ΔΘ_{o,gl}, ΔΘ_{o,ge}).

5. The method according to any one of claims 1 to 4, **characterized in that,** in the positioning method, when checking the distance between the actual angular position and the target angular position, depending on the direction of rotation of a preceding rotation of the output shaft (11), the equal-direction or opposite-direction angular distance (ΔΘ_{o,gl}, ΔΘ_{o,ge}) is used as a basis.

## Revendications

1. Procédé de réglage d'une position angulaire (Θₒ) d'un arbre de sortie (11) lors d'un positionnement au moyen d'un moteur d'entraînement (4) par l'intermédiaire d'un arbre d'entraînement (3) et un engrenage à onde de tension (5) dans une unité d'entraînement (1) pour un robot (15), l'unité d'entraînement (1) présentant l'arbre d'entraînement (3), le moteur d'entraînement (4) pour entraîner l'arbre d'entraînement (3) et l'engrenage à onde de tension (5) pour faire tourner l'arbre d'entraînement (3) sur l'arbre de sortie (11), l'engrenage à onde de tension (5) présentant un générateur d'ondes (5a) relié fonctionnellement à l'arbre d'entraînement (3), une bague flexible (5c) et une bague dentée (5d) pouvant être liée à l'arbre de sortie (11), l'unité d'entraînement (1) comprenant un premier capteur (6a) pour détecter une position angulaire (Θᵢ) de l'arbre d'entraînement (3), un deuxième capteur (6b) pour détecter une position angulaire (Θₒ) de l'arbre de sortie (11) et un troisième capteur (6c) pour détecter une expansion (ω) de la bague flexible (5c), le procédé comprenant
- un procédé d'étalonnage dans lequel, au moyen des premier, deuxième et troisième capteurs (6a, 6b, 6c), des distances angulaires (ΔΘ_{i,gl}, ΔΘ_{i,ge}, ΔΘ_{o,gl}, ΔΘ_{o,ge}) de l'arbre d'entraînement (3) et de l'arbre de sortie (11) sont déterminés lors d'une accélération du moteur d'entraînement (4), par l'intermédiaire desquels il existe une relation non linéaire entre la position angulaire (Θᵢ) de l'arbre d'entraînement (3) et la position angulaire (Θₒ) de l'arbre de sortie (11) en raison d'une expansion (ω) de la bague flexible (5c), une expansion (ω) de la bague flexible (5c) de 0 % étant d'abord réglée et la position angulaire (Θᵢ) de l'arbre d'entraînement (3) étant détectée au moyen du premier capteur (6a) et la position angulaire (Θₒ) de l'arbre de sortie (11) étant détectée au moyen du deuxième capteur (6b) comme premières positions angulaires (Θᵢ, Θₒ), l'arbre de sortie (11) étant alors accéléré de manière définie dans un premier sens de rotation jusqu'à une première vitesse, la position angulaire (Θᵢ) de l'arbre d'entraînement (3) étant détectée au moyen du premier capteur (6a) et la position angulaire (Θₒ) de l'arbre de sortie (11) étant détectée au moyen du deuxième capteur (6b) comme deuxièmes positions angulaires (Θᵢ, Θₒ), dès que le troisième capteur (6c) détecte une expansion constante (ω) de la bague flexible (5c) et les distances angulaires (ΔΘ_{i,gl}, ΔΘ_{o,gl}) de même orientation étant définies respectivement comme étant la distance entre la première position angulaire (Θᵢ, Θₒ) détectée et la deuxième position angulaire (Θᵢ, Θₒ) détectée,
- un procédé de positionnement pour régler la position angulaire (Θₒ) de l'arbre de sortie (11) d'une position angulaire réelle à une position angulaire de consigne avec le deuxième capteur (6b) comme capteur de valeur réelle, dans lequel on vérifie si au moins la distance angulaire (ΔΘ_{o,gl}, ΔΘ_{o,ge}) déterminée de l'arbre de sortie (11) se trouve entre la position angulaire réelle et la position angulaire de consigne, et si ce n'est pas le cas, l'arbre de sortie (11) est mis en rotation jusqu'à ce que la position angulaire réelle soit espacée d'au moins la distance angulaire (ΔΘ_{o,gl}, ΔΘ_{o,ge}) déterminée de l'arbre de sortie (11) par rapport à la position angulaire de consigne, puis la position angulaire réelle est réglée sur la position angulaire de consigne au moyen du deuxième capteur (6b).

2. Procédé selon la revendication 1, **caractérisé en ce que**, ensuite
- l'arbre de sortie (11) est arrêté et, comme troisièmes positions angulaires (Θᵢ, Θₒ), la position angulaire (Θᵢ) de l'arbre d'entraînement (3) est détectée au moyen du premier capteur (6a) et la position angulaire (Θₒ) de l'arbre de sortie (11) est détectée au moyen du deuxième capteur (6b),
- l'arbre de sortie (11) est alors mis en rotation dans un second sens de rotation et est de nouveau arrêté, dès que le troisième capteur (6c) détecte une expansion (ω) de 0 % de la bague flexible (5c), lors de l'arrêt, comme quatrièmes positions angulaires (Θᵢ, Θₒ), la position angulaire (Θᵢ) de l'arbre d'entraînement (3) étant détectée au moyen du premier capteur (6a) et la position angulaire (Θₒ) de l'arbre de sortie (11) étant détectée au moyen du deuxième capteur (6b)
- l'arbre de sortie (11) est alors accéléré de manière définie dans le second sens, comme cinquièmes positions angulaires (Θᵢ, Θₒ), la position angulaire (Θᵢ) de l'arbre d'entraînement (3) étant détectée au moyen du premier capteur (6a) et la position angulaire (Θₒ) de l'arbre de sortie (11) étant détectée au moyen du deuxième capteur (6b), dès que le troisième capteur (6c) détecte une expansion (ω) inchangée de la bague flexible (5c),
- sont définies comme distances angulaires (ΔΘ_{i,ge}, ΔΘ_{o,ge}) opposées respectivement la distance entre la troisième position angulaire (Θᵢ, Θₒ) détectée et la cinquième position angulaire (Θᵢ, Θₒ) détectée.

3. Procédé selon la revendication 2, **caractérisé en ce que** l'expansion (ω) constante est définie comme la différence entre la distance entre la troisième position angulaire (Θᵢ) détectée et la quatrième position angulaire (Θᵢ) détectée de l'arbre d'entraînement (3) et la distance entre la troisième position angulaire (Θₒ) détectée et la quatrième position angulaire (Θₒ) détectée de l'arbre de sortie (11).

4. Procédé selon l'une des revendications 1 à 3, **caractérisé en ce que** dans le procédé de positionnement, l'arbre de sortie (11) est tourné dans le même sens de rotation que dans une rotation immédiatement précédente, afin d'espacer la position angulaire réelle d'au moins la distance angulaire (ΔΘ_{o,gl}, ΔΘ_{o,ge}) déterminée de la position angulaire de consigne.

5. Procédé selon l'une des revendications 1 à 4, **caractérisé en ce que** dans le procédé de positionnement, lors de la vérification de la distance entre la position angulaire réelle et la position angulaire de consigne, en fonction du sens de rotation lors d'une rotation précédente de l'arbre de sortie (11), la distance angulaire de même orientation ou opposée (ΔΘ_{o,gl}, ΔΘ_{o,ge}) est utilisée comme base.
